## Europäisches Patentamt

## European Patent Office

## Office européen des brevets

(19)

(11) Veröffentlichungsnummer: **0 133 436 B1**

(12) # EUROPÄISCHE PATENTSCHRIFT

(45) Veröffentlichungstag der Patentschrift:
**07.01.88**

(51) Int. Cl.⁴: **B 02 C 13/06, B 27 L 11/00, A 01 F 29/02**

(21) Anmeldenummer: **84900706.7**

(22) Anmeldetag: **15.02.84**

(86) Internationale Anmeldenummer:
**PCT/CH 84/00021**

(87) Internationale Veröffentlichungsnummer:
**WO 84/03235 (30.08.84** Gazette **84/21)**

(54) ZERKLEINERUNGSVORRICHTUNG UND VERFAHREN INSBESONDERE ZUR HERSTELLUNG VON HOLZSPÄNEN.

(30) Priorität: **22.02.83 DE 3306068**

(43) Veröffentlichungstag der Anmeldung:
**27.02.85 Patentblatt 85/9**

(45) Bekanntmachung des Hinweises auf die Patenterteilung:
**07.01.88 Patentblatt 88/1**

(84) Benannte Vertragsstaaten:
**AT BE CH DE FR GB LI NL SE**

(56) Entgegenhaltungen:
**AU - B - 507 511**
**CH - A - 544 483**
**DE - C - 387 995**
**DE - C - 516 505**
**DE - C - 843 974**
**DE - C - 887 126**
**DE - C - 2 428 442**
**FR - A - 943 110**
**FR - A - 2 386 260**
**US - A - 2 449 605**
**US - A - 2 584 262**
**US - A - 2 735 469**
**US - A - 2 935 267**
**US - A - 3 254 687**
**US - A - 3 297 068**
**US - A - 3 806 047**

(73) Patentinhaber: **GISIGER, Kurt, Kreuzweg, CH-3254 Messen (CH)**

(72) Erfinder: **GISIGER, Kurt, Kreuzweg, CH-3254 Messen (CH)**

(74) Vertreter: **Nithardt, Roland, CABINET MOSER & CIE 76, Rue de Lausanne, CH-1202 Genève (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Zerkleinerungsmaschine nach dem Oberbegriff des Patentanspruchs 1, sowie ein Verfahren nach dem Oberbegriff des Anspruchs 12.

Es sind eine Reihe von Zerkleinerungsvorrichtungen bekannt, welche nach dem Prinzip eines umlaufenden Zerkleinerungswerkzeugs arbeiten.

Aus der US Patentschrift 1 726 435 ist eine Zerkleinerungsmaschine bekannt geworden, welche nach dem oben beschriebenen Prinzip arbeitet. Entsprechend der Beschreibung wird in dieser Maschine das zu zerkleinernde Gut in den Trichter 10 geschüttet, von wo es über eine Endloskette 6 auf ein mit einem gegenteilig profilierten Rad 3 zusammenarbeitendes, angetriebenes, profiliertes Zubringerrad 4 gelangt. Nach Passieren der beiden Räder 3 und 4 gelangt das zu zerkleinernde Gut auf eine Auflageplatte 11, welche mit auf einer umlaufenden Trommel 1 befestigten Schneidewerkzeugen zusammenwirkt. Unterhalb der Trommel 1 befindet sich eine zweite Trommel 2, welche umlaufende Reibwerkzeuge 18 aufweist. Zwischen beiden Trommeln ist eine graduell schliessbare Klappe 26 für eine Austragsöffnung angeordnet, welche entsprechend ihrer Schliessstellung eine mehr oder weniger feine Nachbearbeitung durch die Reibwerkzeuge ermöglicht.

Mit einer derartigen Zerkleinerungsvorrichtung ist es möglich, den Feinheitsgrad der zerkleinerten Teile, einzustellen. Es ist jedoch nicht möglich, bei Verwendung einer derartigen Vorrichtung zur Zerkleinerung von Holz, Späne herzustellen, deren Längsdimension parallel zur Faserrichtung des Holzes ausgerichtet ist. Bei der hier vorgesehenen regellosen Beschickung der Zerkleinerungsvorrichtung werden die Späne in etwa gleichmässiger Verteilung der Faserrichtungen im Verhältnis zur Längsdimension der Späne erzeugt. Bei Einführen beispielsweise eines Holzbalkens würden die Schneidewerkzeuge sogar Späne mit einer Längsdimension quer zur Faserrichtung erzeugen.

Aus der deutschen Patentschrift 946 019 ist eine Zerkleinerungsmaschine für landwirtschaftliche Produkte bekanntgeworden, welche im Prinzip aus zwei zusammengebauten, einzelnen Maschinen besteht. Die eine Maschine ist ein Häcksler, mit dem Heu, Stroh oder Grünfutter wie Rüben in gleiche, relativ grosse Teile zerhackt werden. Die zweite Maschine ist ein Reisser, welcher die gehackten Stücke bei Bedarf noch weiter zerkleinert, wie dies bei Grüngut, welches getrocknet werden soll, geschieht. Bei der vorgesehenen Verwendung dieser Vorrichtung für landwirtschaftliche Produkte ist es völlig gleichgültig, in welcher Orientierung die Teilchen geschnitten werden, so dass hiermit keine Zerkleinerung in Teile durchgeführt zu werden braucht, welche eine bestimmte Ausrichtung in Bezug auf ihre Faserung aufweisen.

Die US Patentschrift 2 735 469 zeigt einen Zerhacker, bei dem im wesentlichen tangential zu ihrer Umlaufbahn angeordnete Schneidewerkzeuge mit Gegenschneiden zusammenarbeiten, welche derart angeordnet sind, dass durch die schnelle Rotation ein Luftstrom entsteht, der das geschnittene Gut ausfördert. Auch hier findet nur eine regellose Zerkleinerung statt, die die Erzeugung von Teilchen unmöglich macht, deren Längsrichtung parallel zu iher Faserrichtung ist.

Die US Patentschrift 3 254 687 zeigt eine Vorrichtung, welche im Prinzip derjenigen der deutschen Patentschrift 946 019 entspricht und daher die gleichen Mängel ausweist, was die Erzeugung von gerichteten Teilchen betrifft.

Wie bereits erwähnt, sind alle bekannten Zerkleinerungsvorrichtungen nicht in der Lage, aus Holz jedweder Faserrichtung Späne zu erzeugen, deren Längsdimension parallel zur Faserrichtung ist.

Bei der Herstellung von Holzspanplatten ist es aus Festigkeitsgründen notwendig, einerseits Späne einer bestimmten Grösse oder einer bestimmten Grössenverteilung zu verwenden, andererseits müssen die Späne die Faserrichtung aufweisen, die parallel zur Längsrichtung der Späne ist, da diese sonst entlang der Fasern abbrechen würden, womit die Spangrösse allgemein verkleinert würde.

Die US Patentschrift 2 584 262 zeigt eine Schneidemaschine mit einem Rotor, der parallele Scheiben mit radialen und mit achsparallelen Zähnen aufweist und mit einer eingekerbten Aufliegeplatte zusammenarbeitet. So werden achsparallele Holzstücke in Brocken zerschnitten, welche eine bestimmte Grösse und eine Längsdimension aufweisen, die parallel zur Holzfaserung sein kann. Mit der geschilderten Maschine ist es jedoch nicht möglich, aus diesen Holzbrocken echte Holzspäne zu erzeugen und deren Grösse auszuwählen.

Es ist daher Aufgabe der Erfindung, eine Zerkleinerungsvorrichtung bereitszustellen, mit deren Hilfe Holzspäne erzeugt werden können, deren Längsdimension parallel zur Holzfaserung ist.

Diese Aufgabe wird durch eine Zerkleinerungsvorrichtung der eingangs erwähnten Art gelöst, welche ferner dadurch gekennzeichnet ist, dass die zusätzlichen Werkzeuge aus Schlagwerkzeugen bestehen, deren Abstand zur Aufliegeplatte grösser ist als jener der Trennwerkzeuge, und dass der Rotor in einer mit Pralleisten und Siebstrecken ausgerüsteten Trommel angebracht ist, wobei die Förderrichtung der Zubringereinrichtung senkrecht zur Drehachse des Rotors liegt.

Mit einer derartigen erfindungsgemässen Zerkleinerungseinrichtung ist es möglich, unzerkleinertes Holz in Form von Stämmen, Balken, Brettern oder ähnlichem in einer Weise zu Spänen zu verarbeiten, dass die Späne in Längsrichtung gefasert sind. Hierzu wird zum Beispiel ein Balken in die Zerkleinerungseinrichtung der Länge nach eingeführt, wobei naturgemäss die Faserung des Balkens in seiner Längsrichtung verläuft. Mit Hilfe der Trennwerkzeuge, dessen Rotations- bzw. Aktionskreis grösser ist als jener der Schlagwerkzeuge, wird der Balken bei Erreichen der Trommel in Längsrichtung zersägt, wobei je nach Anzahl von in unterschiedlichen Rotationsebenen angeordneten Lamellen eine entsprechende Anzahl von Balkensegmenten geschnitten werden. Diese Segmente treffen nach weiterem Vorschub auf die Schlagwerkzeuge, durch welche die Segmente in Späne zerhackt werden.

Jedes Trennwerkzeug kann hierzu aus zumindest einer Lamelle bestehen, welche am Umfang des Rotors montiert ist und radial von diesem wegsteht, so dass sie bei Rotation um die Drehachse des Rotors wie eine Kreissäge wirkt. Die Länge der Lamellen, d.h. die radiale Dimension soll hierfür im Verhältnis zur Breite wesentlich grösser sein, damit ein richtiger Sägeeffekt erzielt wird. Die Lamellen können fix oder drehbar am Rotor montiert sein, wobei sie sich im letzteren Fall unter der Wirkung der Fliehkraft bei der Rotation radial nach aussen stellen und den Vorteil einer gewissen Flexibilität gegenüber hartem Zerkleinerungsgut aufweisen.

Zum Zerschneiden bzw. Zersägen der Holzteile können mehrere Lamellen in verschiedenen Rotationsebenen angeordnet sein, so dass das Holz in mehrere, der Anzahl der Rotationsebenen entsprechende Segmente getrennt wird. Innerhalb einer Rotationsebene können eine oder mehrere Lamellen angeordnet sein, wobei sich im zweiten Fall die Schneidekapazität entsprechend erhöht. Günstigerweise werden mehrere Lamellen pro Rotationsebene vorgesehen, um keine Unwuchtigkeiten zu erzeugen.

Die zum Zerhacken der Segmente in Späne vorgesehenen Schlagwerkzeuge können ebenso wie die Trennwerkzeuge am Umfang der Rotoren angeordnet und zahlenmässig diesen gleich sein, wobei jeweils in Richtung der Drehachse des Rotors gesehen, ein Hammer zwischen zwei Lamellen zu liegen kommt. Die rotierenden Hämmer schlagen auf diese Weise auf die Segmente und reissen derart einzelne Späne aus ihnen heraus.

Die Trommel, in welcher der Rotor und die Werkzeuge angeordnet sind, weist in bekannter Art Pralleisten und Siebstrecken auf, so dass die abgehackten Späne durch das Aufprallen auf die Pralleisten noch weiter zerkleinert werden können. Die Austragsvorrichtung kann zum Sortieren der Späne in solche richtiger Grösse und solche, die noch zu gross sind, verschiedene Trenneinrichtungen aufweisen, mit deren Hilfe die zu grossen Späne neuerlich in die Trommel eingeführt und weiter zerkleinert werden. Ferner kann in der Austragsvorrichtung ein Abscheider für Schwergut wie Steine oder Metalle vorgesehen sein, welcher beispielsweise nach dem Prinzip des Luftgegenstroms arbeitet.

Die Drehachse des Rotors kann über dem Niveau der Auflagefläche der Zubringervorrichtung angeordnet werden, wobei das zu zerkleinernde Gut aufgrund der bei dieser Anordnung auftretenden Radialkomponente der Bewegung der Werkzeuge im Augenblick des Auftreffens auf das Zerkleinerungsgut je nach Relativlage der Drehachse zur Auflageebene der Zubringervorrichtung von der Trommel zurückgestossen oder in diese hineingezogen werden kann. Im günstigsten Fall ist die Gesamtwirkung null, d.h. das Holz erfährt keine Stossbewegungen in Förderrichtung. Es ist möglich, jeweils eine Lamelle mit einem Hammer fix zu verbinden, wobei die Zahl der Montagepunkte auf dem Rotor vermindert wird.

Dem Gedanken, der zur erfindungsgemässen Zerkleinerungsvorrichtung geführt hat, liegt das Prinzip eines neuen Verfahrens zur Zerkleinerung von Holz zugrunde, nach welchem Holzstücke wie Stämme, Balken, Bretter oder ähnliches durch ein Trennwerkzeug in parallel zur Faserrichtung verlaufende Segmente zerschnitten und die Segmente durch Schlagen in Vibrationen versetzt werden, wobei sie sich in einzelne Fasern aufspalten. Gleichzeitig werden durch das Schlagen jeweils am freien Ende der Segmente Späne von den Fasern abgehackt.

Die Erfindung ist im folgenden anhand der Zeichnung beispielsweise erläutert, wobei

Figur 1 eine erfindungsgemässe Zerkleinerungsvorrichtung im Aufriss zeigt.

Figur 2a und b stellen den Rotor und Werkzeuge zusammen mit einem zu zerkleinernden Holzstück aus verschiedenen Sichtrichtungen dar.

Figur 3 und 4 zeigen schematisch erfindungsgemässe Zerkleinerungsvorrichtungen mit unterschiedlichen Austragsvorrichtungen.

Figur 5 illustriert die Einstellbarkeit der Drehachse bezüglich der als Gegenmesser ausgebildeten Auflageplatte.

Figur 6 illustriert die Anordnung der Drehachse des Rotors in Bezug auf die Zubringereinrichtung.

Figur 7 zeigt eine spezielle Ausbildung der Schlagwerkzeuge für besonders zähe Produkte.

Figur 8 zeigt eine Auflageplatte und ein Werkzeug, welche beide in ihrer Relativposition zueinander verstellbar sind.

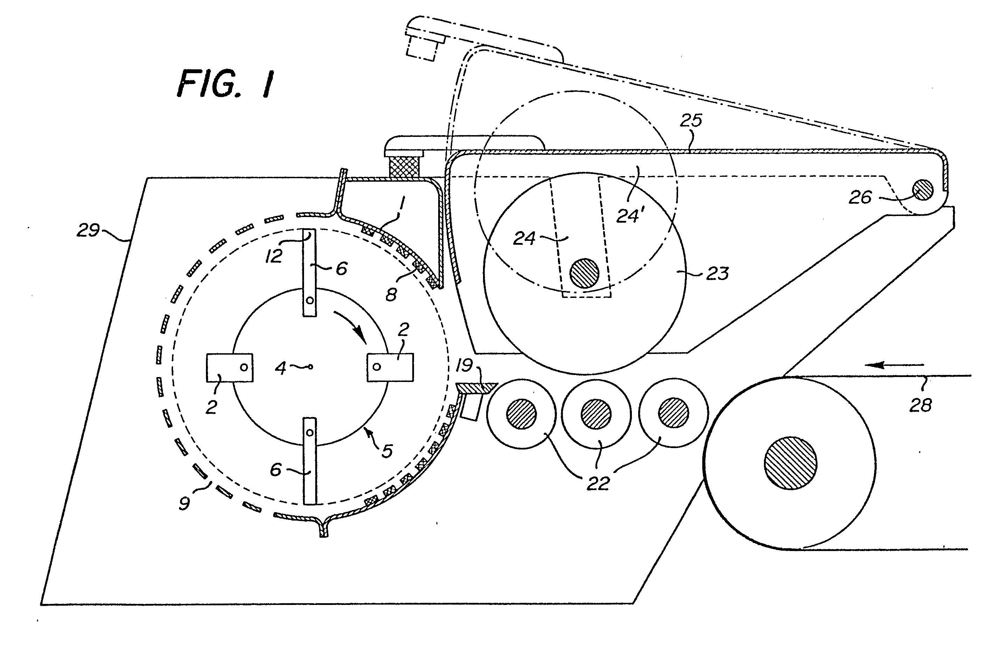

Die Figur 1 zeigt eine erfindungsgemässe Zerkleinerungsvorrichtung bestehend aus einem Gehäuse 29, einer Zubringereinrichtung mit einem Laufband 28, Transportrollen 22 und einer Stabilisierungsrolle 23, einer Auflageplatte 19, einer Trommel 1 und einen innerhalb der Trommel angeordneten Rotor 5.

Die Stabilisierungsrolle ist an einem um eine Achse 26 schwenkbaren Deckel 25 angeordnet, welcher je nach Dicke des zu zerkleinernden Holzes nach oben ausweichen kann, um den Weg in die Trommel freizugeben. Die Montage der Rolle 23 erfolgt auf einen Lappen 24, der von einer Verstrebung 24' des Deckels absteht.

Der innerhalb der Trommel 1 angeordnete Rotor 5 trägt an seinem Umfang Werkzeuge, welche mit ihm in der Trommel rotieren können. In erfindungsgemässer Weise gibt es zwei verschiedene Arten von Werkzeugen; die eine Art besteht aus Trennwerkzeugen 6, welche weiter von der Rotationsachse 4 abstehen, d.h. länger sind als Schlagwerkzeuge, welche das Bezugszeichen 2 tragen.

Die Länge der Lamellen, die das Trennwerkzeug bilden, ist so gewählt, dass deren Schneidekanten 12 in einem vorbestimmten Abstand an der Aufliegeplatte 19 vorbeirotieren. Der entsprechende Abstand der Hämmer 2, welche das Schlagwerkzeug bilden, ist grösser als der erstgenannte Abstand.

Durch entsprechende Wahl bzw. Einstellung dieser Grössen kann, wie noch beschrieben wird, die Qualität der Späne entsprechend gewählt werden.

Nach der Bearbeitung des zu zerkleinernden Guts durch die beschriebenen Werkzeuge werden die Späne gegen Pralleisten 8 geschleudert, wodurch Sie weiter zerkleinert werden. Im weiteren Verlauf der Rotation des zerkleinerten Guts, welche durch die umlaufenden Werkzeuge in Gang gehalten wird, verlassen die Späne durch die Öffnungen 9 von Siebstrecken die Trommel.

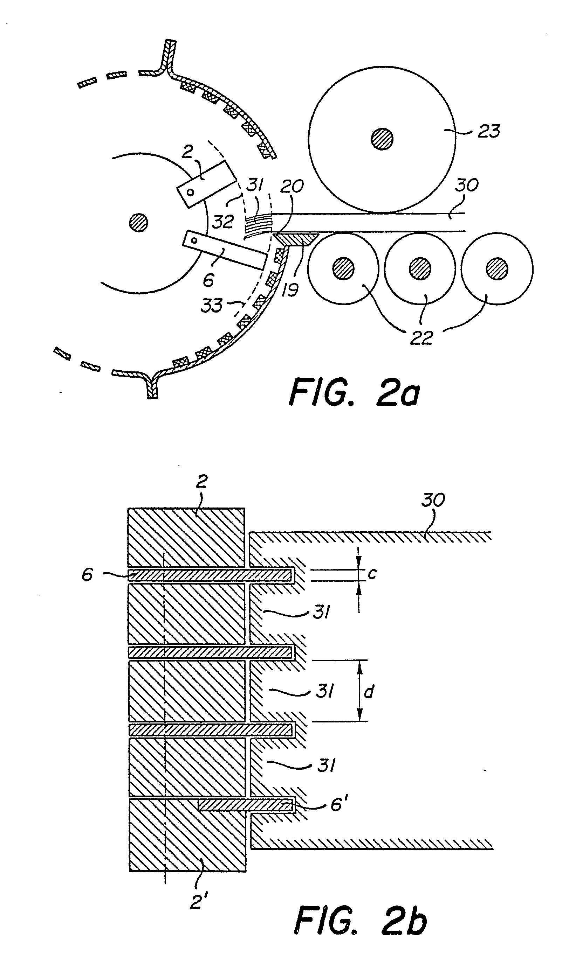

In der Figur 2a ist der Bereich der Zerkleinerungsvorrichtung, in welchem die Werkzeuge das Holz bearbeiten, vergrössert dargestellt, wobei der Einfachheit halber nur je ein Werkzeugelement dargestellt ist.

Ein Holzbalken 30, welcher zwischen den Transportrollen 22 und der Stabilisierungsrolle 23 geführt ist, steht mit seinem freien Ende 31 über die Kante 20 der Aufliegeplatte 19 hinaus. Der Teil des über die Kante 20 hinausstehenden Endes 31, welcher innerhalb der Umlaufbahn 33 des Schneidewerkzeugs 6 liegt, wird hierbei mittels des Schneidewerkzeugs in Segmente zerschnitten, deren Schnittflächen parallel zur Zeichenebene liegen. Die Länge des Endes 31 wird begrenzt durch die Umlaufbahn 32 des Schlagwerkzeugs 2.

In der Figurg 2b sind die Schnittfläche eines Holzbalkens 30 und die entsprechenden Werkzeuge in Draufsicht dargestellt, wobei ersichtlich ist, wie das Schneidewerkzeug 6 den Balken 30 in Längsrichtung aufschneidet, und wie die Hämmer 2 auf die verbleibenden Segmente schlagen.

Die Segmente 31, welche aus dem Balken 30 geschnitten wurden, werden durch die Hämmer 2 bei deren Umlauf derart am Ende angeschlagen, dass sie einerseits in Vibration versetzt werden, wobei sie sich in ihre Einzelfasern oder zumindest Faserbündel auflösen, die in Längsrichtung zum Balken 30 von diesem wegstehen. Andererseits werden durch die Hämmer 2 beim Vorbeilauf kleine Stücke von den Fasern abgeschlagen, deren Länge über das Zusammenspiel von Drehzahl des Rotors und Vorschubgeschwindigkeit des Balkens eingestellt werden kann.

Die in Figur 2b dargestellten Werkzeuge 6 und 2 liegen in verschiedenen Rotationsebenen, wobei je ein Hammer zwischen zwei Lamellen liegt. In einer Variante, welche die Montage der Werkzeuge am Rotor erleichtert und ferner eine erhöhte Stabilität gewährleistet, wird ein Kombinationswerkzeug verwendet, welches aus einer Verbindung eines Hammers 2' mit einr Lamelle 6' besteht.

Aus der Beschreibung des Zerkleinerungsvorgangs ist klar, dass das Holz faserparallel gespalten wird, wobei die Feinheit der erzeugten Späne von den Betriebsparametern wie Drehzahl und Vorschubgeschwindigkeit beeinflusst werden kann.

Durch die Wahl der Dicken der Werkzeuge ist eine weitere Anpassung des Zerkleinerungsvorgangs an die Holzqualität möglich. Da einerseits die Eigenschaft verschiedener Holzsorten, sich beim Schlagen in ihre Fasern aufzuspalten, unterschiedlich stark ausgeprägt ist, und andererseits die technischen Eigenschaften wie Elastizität und Biegsamkeit, welche zur Erzeugung einer ausreichenden Vibration eine entsprechende Anpassung der Betriebsparameter erfordern, verschieden sind, ist es vorteilhaft, alle diese Parameter variabel zu halten. Hierzu gehört auch eine variable Dicke der Segmente 31, welche durch den Abstand zweier Lamellen sowie die Dicke d der Hämmer in Achsrichtung gesehen, bestimmt ist. Die Dicke c der Lamellen kann ebenso variiert werden.

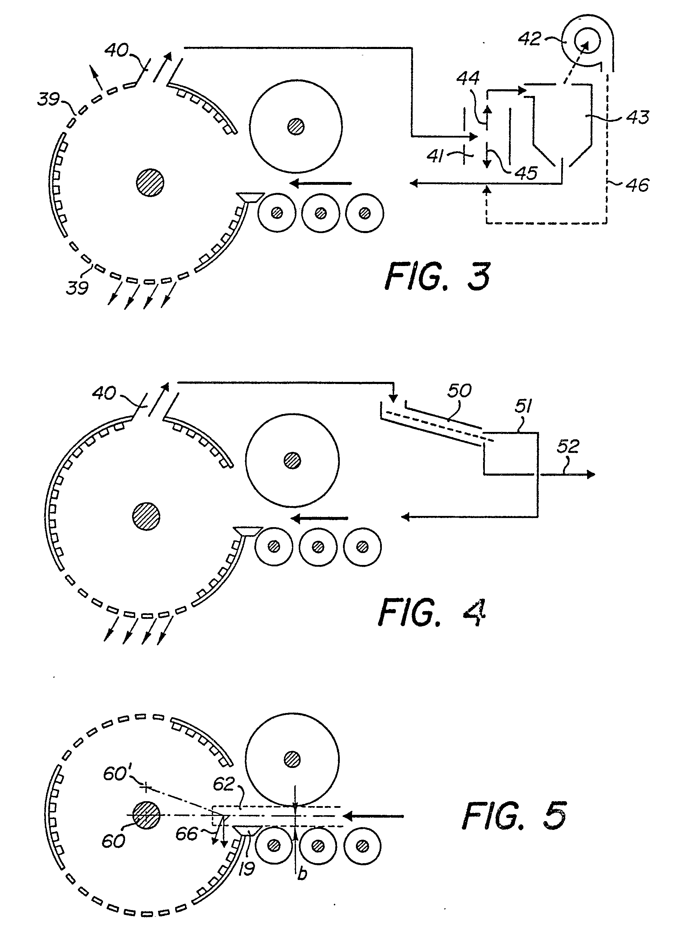

In der Figur 3 und 4 sind erfindungsgemässe Zerkleinerungseinrichtungen schematisch dargestellt, welche verschiedene Austragsvorrichtungen aufweisen. Die Entscheidung darüber, welche Art von Austragsvorrichtung für einen bestimmten Anwendungszweck vorgesehen werden sollte, ist abhängig davon, welches Ausgangsmaterial zur Verfügung steht, und wie eng die Grenzen für die Qualität des Gutmaterials sind.

In der Figur 3 ist eine Trommel 1 vorgesehen, welche zwei Siebstrecken 39 aufweist, welchen eine Austrittsöffnung 40 folgt.

Die Betriebsparameter und die Grösse der Öffnungen der Siebstrecken sind derart gewählt, dass praktisch das ganze Gutmaterial nach Durchlaufen von etwa dreiviertel einer Gesamtumdrehung die Trommel über die Siebstrecken 39 verlassen hat. Das verbleibende Material besteht einerseits aus Bestandteilen, deren Substanz gut ist, die aber noch zu gross sind, sogenanntes Grobmaterial, und aus Bestandteilen wie zum Beispiel Steine, Metalle und ähnliches Schwergut.

Zur Ausscheidung dieser Bestandteile genügt eine reine Siebung nicht mehr, so dass hier die Einbeziehung eines Schwergutabscheiders nötig ist. Ein derartiger Schwergutabscheider kann beispielsweise aus einer Gegenstromanlage 41, 42 bestehen, wobei das gesamte aus der Trommel 1 kommende Material in einen senkrechten Zylinder 41 geführt wird, in dem mittels eines Gebläses 42 eine von unten nach oben führende Luftströmung 46 erzeugt wird. Die Strömungsgeschwindigkeit der Luft ist hierbei derart eingestellt, dass Holzteile 44 nach oben mitgerissen werden, Steine und Metallstücke 45 jedoch nach unten fallen.

Die groben Holzteile werden in einem Trichter 43 gesammelt und wieder in die Trommel 1 geführt, wo sie durch die Pralleisten weiter zerkleinert werden.

Die Anordnung einer derartigen Austragsvorrichtung ist vorteilhaft bei stark verunreinigtem Holz, welches beispielsweise Nägel und dergleichen enthält, oder welches mit Schutt zusammen gelagert wurde.

Für den Fall, dass nicht mit Schwergut zu rechnen ist, kann nach der Austrittsöffnung 40 nur ein Sieb 50 angeordnet sein, welches das Grobgut 51 vom Feingut 52 trennt. Eine derartige Anordnung, wie sie in Figur 4 dargestellt ist, findet beispielsweise Verwendung bei der Erzeugung von sehr feinen Spänen, wo die Siebwirkung der Siebstrecken der Trommel nicht ausreicht, um das Gutmaterial vom Grobmaterial zu trennen. Vorteilhafterweise ist in einem solchen Fall das Sieb 50 in der Austragsstrecke ein aktives Sieb, beispielsweise ein Rüttelsieb oder ähnliches.

Die Figur 5 illustriert die Auswirkung der Lage der Drehachse des Rotors auf die Zuförderung des Holzes.

Die horizontale Lage der Drehachse 60 ist um den Betrag b über der Auflagefläche der Platte 19 dimensioniert. Hierdurch trifft ein Werkzeug, welches radial zur Drehachse verläuft, in einer Weise auf ein zu zerkleinerndes Holzstück 62 auf, dass die Summe der Impulse, welche auf das Holz übertragen werden, genau senkrecht zur Förderrichtung bzw. zur Auflagefläche der Platte 19 gerichtet ist. Nur wenn diese Bedingung erfüllt ist, wird das Holz weder in die Trommel hineingezogen noch zurückgestossen. Würde die Drehachse bei 60' liegen, so weist die Summe der Impulse eine Resultierende 66 auf, welche eine Komponente in Förderrichtung besitzt.

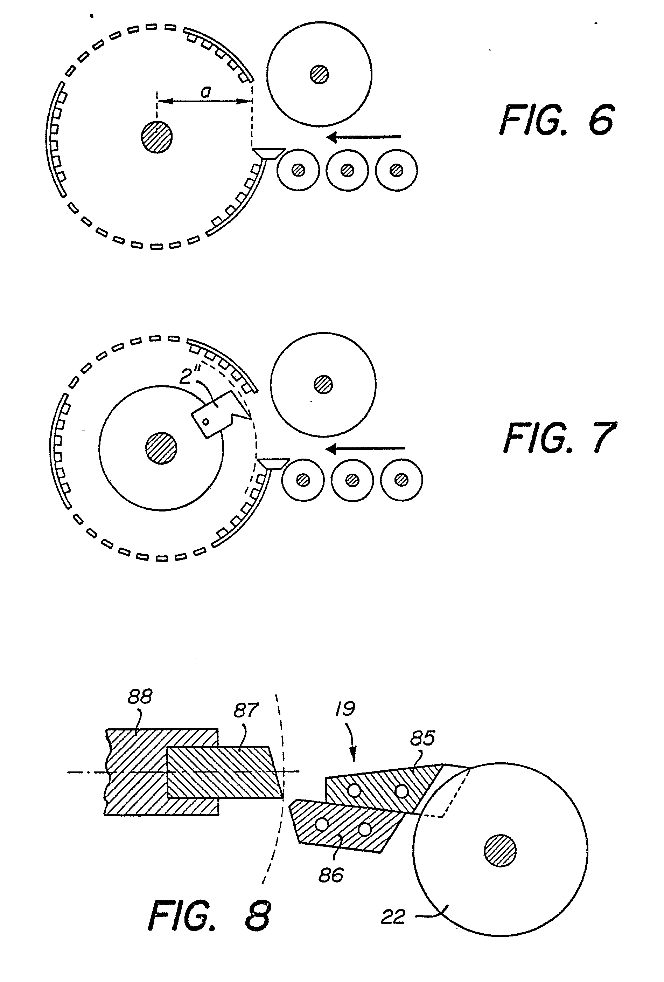

Die Figur 6 zeigt die Einstellbarkeit der Rotationsachse 4 in waagerechter Richtung von der Platte 19. Wie bereits unter der Figur 2b beschrieben, ist die Länge der Holzsegmente wesentlich für ihre Bereitschaft, sich in Fasern aufzuspalten. Um diese Länge zu variieren, aber auch um eine Abnützung der Werkzeuge kompensieren zu können, ist der Abstand der Rotationsachse 4 von der Platte 19 variierbar.

Die Figur 7 zeigt eine erfindungsgemässe Zerkleinerungsvorrichtung, wobei die Werkzeuge, d.h. vor allem die Schlagwerkzeuge, speziell zur Zerkleinerung von besonders zähem Material ausgebildet sind. Hierzu ist ein Hammer 2″ an seinem freien Ende keilförmig zugeschliffen, wobei der Keilrand eine Messerschneide aufweisen kann. Die Trennwerkzeuge können in einer derartigen Vorrichtung je nach spezifischem Einsatz ebenfalls einen Schliff aufweisen.

Die Figur 8 zeigt eine Auflageplatte 19, welche in ihrer Länge variabel ist. Sie besteht aus zwei Teilen 85 und 86, welche aneinander verschiebbar in der gewünschten Position fixiert werden können. Die Verschiebung erfolgt beispielsweise über eine Schwalbenschwanzführung.

Der Zweck dieser verschiebbaren Platte ist es, die gewünschte Länge der Holzsegmente einzustellen, welche in Vibration versetzt werden. Selbst wenn die Segmente nicht bis zum Anschlag der Auflageplatte aufgeschnitten sind, so kann bereits der ganze Balken an der Vibration teilnehmen, soweit er nicht auf der Auflageplatte aufliegt. Aus diesem Grund ist die Auflagefläche des Teils 85 gegenüber der Horizontalen geneigt.

Die Werkzeuge 87 können, wie dargestellt, ebenfalls verschiebbar auf einem Werkzeugträger 88 montiert sein, der seinerseits am Rotor (nicht dargestellt) angeordnet ist.

Die Erfindung wurde anhand der Zeichnung beispielhaft erläutert, ist aber keinesfalls auf die dargestellten Ausführungsbeispiele beschränkt. Sie erstreckt sich vielmehr auf das Prinzip der Herstellung von Holzspänen in faserparalleler Ausrichtung, wobei mittels eines Trennwerkzeugs das Holz in Segmente vorgeschnitten wird, hierauf durch Schlagen die Segmente in die Einzelfasern oder zumindest Faserbündel aufgespalten und mittels des gleichen Schlagwerkzeugs kleine Teile von den Fasern oder Faserbündeln abgehackt werden.

**Patentansprüche**

1. Zerkleinerungsmaschine zur Herstellung von Spänen für Holzspanplatten, mit einer Zubringereinrichtung (22, 23 und 28) für das zu zerkleinernde Holz, einer eine Aufliegeplatte (19) für dieses Holz und einer einen Rotor (5) umfassenden Zerkleinerungsvorrichtung, sowie mit einer Austragsvorrichtung für Gutmaterial, wobei der Rotor mehrere in Trennebenen senkrecht zur Drehachse (4) des Rotos angeordneten Trennwerkzeuge (6), sowie zusätzliche, jeweils zwischen diesen Trennebenen angeordnete Werkzeuge (2) aufweist, dadurch gekennzeichnet, dass die zusätzlichen Werkzeuge aus Schlagwerkzeugen (2) bestehen, deren Abstand zur Aufliegeplatte (19) grösser ist als jener der Trennwerkzeuge, und dass der Rotor (5) in einer mit Pralleisten (8) und Siebstrecken (39) ausgerüsteten Trommel (1) angebracht ist, wobei die Förderrichtung der Zubringereinrichtung senkrecht zur Drehachse (64) des Rotors liegt.

2. Zerkleinerungsmaschine nach Anspruch 1, dadurch gekennzeichnet, dass jedes Trennwerkzeug aus zumindest einer, in Umfangsnähe des Rotors (5) an diesem montierten Lamelle (6) besteht, deren Längsrichtung radial zur Drehachse (4) des Rotors ausgerichtet ist.

3. Zerkleinerungsmaschine nach Anspruch 2, dadurch gekennzeichnet, dass die in Richtung der Drehachse (4) des Rotors liegende Dimension der Lamellen (6) wesentlich kleiner ist als ihre Längsdimension.

4. Zerkleinerungsmaschine nach Anspruch 2, dadurch gekennzeichnet, dass die Trennwerkzeuge aus mehreren über den Umfang des Rotors verteilten Reihen von Lamellen (6) bestehen, wobei einander entsprechende Lamellen jeder Reihe in einer gemeinsamen Ebene angeordnet sind.

5. Zerkleinerungsmaschine nach einem der Ansprüche 2 oder 4, dadurch gekennzeichnet, dass die Schlagwerkzeuge aus einzelnen Hämmern (2) bestehen, welche zwischen den verschiedenen Ebenen von Lamellen (6) angeordnet sind.

6. Zerkleinerungsmaschine nach Ansprüchen 4 und 5 dadurch gekennzeichnet, dass die Hämmer (2) in Reihen ausgerichtet sind, welche in Umfangsrichtung des Rotors zwischen den Reihen der Lamellen angeordnet sind.

7. Zerkleinerungsmaschine nach einem der Ansprüche 1 bis 6, dadurch gekennzeichnet, dass die Austragsvorrichtung einer Trennvorrichtung (40 bis 46, 50) zum Trennen des Gutmaterials vom Grob- oder Schwergut aufweist, mit deren Hilfe das Gutmaterial gesammelt, das Grobgut in die Zerkleinerungsvorrichtung zurückgefördert und das Schwergut ausgeschieden wird.

8. Zerkleinerungsmaschine nach Anspruch 7, dadurch gekennzeichnet, dass die Austragsvorrichtung eine Gegenstromluftkammer (Zylinder 41) aufweist, durch welche das spezifische leichtere Grobgut in einen Sammelbehälter zur Rückführung in die Zerkleinerungsvorrichtung gefördert wird, und das spezifische schwerere Schwergut gegen die Strömungsrichtung fortfällt.

9. Zerkleinerungsmaschine nach Anspruch 7 oder 8, dadurch gekennzeichnet, dass die Austragsvorrichtung ein Sieb (50) zur Trennung des Gutmaterials vom Grobgut aufweist.

10. Zerkleinerungsmaschine nach einem der Ansprüche 1 bis 9, dadurch gekennzeichnet, dass die Drehachse (4) des Rotors über der Auflageebene der Zubringervorrichtung angeordnet ist.

11. Zerkleinerungsmaschine nach Anspruch 5 oder 6, dadurch gekennzeichnet, dass die Lamellen und Hämmer zu Werkzeugen, bestehend aus jeweils einer Lamelle (6') und einem Hammer (2'), verbunden sind.

12. Verfahren zur Herstellung von Holzspänen mit einer Längsdimension parallel zur Holzfaserung, dadurch gekennzeichnet, dass das Holz durch ein Trennwerkzeug in parallel zur Faserrichtung verlaufende Segmente vorgeschnitten wird, dass durch ein Schlagwerkzeug die Segmente in Vibration versetzt werden, wodurch sie sich in ihre einzelnen Fasern oder in Faserbündel aufspalten, und dass bei jedem Schlag des Schlagwerkzeugs ein Stück der aufgespaltenen Fasern oder Faserbündel abgeschlagen wird.

## Claims

1. Crushing machine for producing chips for wood-chip boards, including a feeder apparatus (22, 23 and 28) for the wood to be crushed, a supporting plate (19) for this wood and a crushing device including a rotor (5), and further including a discharge device for the crushed product, the rotor including several parting tools (6) arranged in parting planes perpendicular to the axis of rotation (4) of the rotor and auxiliary tools (2) respectively arranged between said parting planes, characterized in that the auxiliary tools consist of striking tools (2) whose spacing from the supporting plate (19) is greater than that fo the parting tools, and that the rotor (5) is mounted in a drum (1) equipped with breaker strips (8) and screen sections (39), the direction of advance of the feeder apparatus being perpendicular to the axis of rotation (4) of the rotor.

2. Crushing machine according to claim 1, characterized in that each parting tools consists of at least one segment (6) mounted on the rotor (5) near the periphery thereof, the longitudinal direction of said segment being oriented radially with respect to the axis of rotation (4) of the rotor.

3. Crushing machine according to claim 2, characterized in that the dimension of the segments (6) in the direction of the axis of rotation (4) of the rotor is appreciably smaller than its longitudinal dimension.

4. Crushing machine according to claim 2, characterized in that the parting tools consist of several rows of segments (6) distributed over the circumference of the rotor, corresponding segments of each row being arranged in a common plane.

5. Crushing machine according to one of the claims 2 or 4, characterized in that the striking tools consist of individual hammers (2) arranged between the different planes of the segments (6).

6. Crushing machine according to claims 4 and 5, characterized in that the hammers (2) are arrayed in rows peripherally arranged between said rows of segments.

7. Crushing machine according to one of the claims 1 to 6, characterized in that the discharge device comprises a separating device (40 to 46, 50) for separating the crushed product from oversized or dense materials, by means of which the crushed product is collected, the oversized material is returned to the crushing machine and the dense material is removed.

8. Crushing machine according to claim 7, characterized in that the discharge device comprises a countercurrent air flow chamber (cylinder 41) whereby the specific lighter oversized material is conveyed to a storage bin for recycling to the crushing machine, and the specific heavier dense material falls off against the flow direction.

9. Crushing machine according to claim 7 or 8, characterized in that the discharge device comprises a screen (50) for separating the crushed product from the oversized material.

10. Crushing machine according to one of the claims 1 to 9, characterized in that the axis of rotation (4) of the rotor is arranged above the supporting plane of the feeder apparatus.

11. Crushing machine according to claim 5 or 6, characterized in that the segments and the hammers are combined to tools each consisting of one segment (6') and one hammer (2').

12. Process for the production of wood chips with a longitudinal dimension parallel to the wood grain, characterized in that the wood is precut by a parting tool into sections extending parallel to the fiber direction, that the sections are caused to vibrate by a striking tool, whereby they are split up into their individual fibers or into fiber bundles, and that a piece of the split up fibers or fiber bundles is knocked off at each impact of the striking tool.

# Revendications

1. Machine de fragmentation pour produire des copeaux pour panneaux de copeaux de bois, comportant un dispositif (22, 23 et 28) d'amenée du bois à fragmenter, un dispositif de fragmentation entourant une plaque d'appui (19) pour ce bois et un rotor (5), et un dispositif d'évacuation du matériau produit, dans laquelle le rotor comporte plusieurs outils de sectionnement (6) disposés dans des plans de sectionnement perpendiculaires à l'axe (4) de rotation du rotor, ainsi que des outils supplémentaires (2) disposés entre ces plans de sectionnement, caractérisée en ce que les outils supplémentaires sont des outils de frappe (2) dont la distance par rapport à la plaque d'appui (19) est plus grande que celle des outils de sectionnement, et en ce que le rotor (5) est disposé dans un tambour (1) comportant des chicanes (8) en forme de lattes et des cribles (39), la direction de transport du dispositif d'amenée étant perpendiculaire à l'axe (4) de rotation du rotor.

2. Machine selon la revendication 1, caractérisée en ce que chaque outil de sectionnement est formé d'au moins une lamelle (6) montée sur le rotor (5) au voisinage de la périphérie de celui-ci et dont la direction longitudinale est orientée radialement par rapport à l'axe (4) de rotation du rotor.

3. Machine selon la revendication 2, caractérisée en ce que la dimension des lamelles (6) en direction de l'axe (4) de rotation du rotor est sensiblement plus petite que leur dimension longitudinale.

4. Machine selon la revendication 2, caractérisée en ce que les outils de sectionnement sont formés de plusieurs rangées de lamelles (6) réparties sur la périphérie du rotor, et en ce que les lamelles correspondant à chaque rangée sont disposées dans un plan commun.

5. Machine selon l'une des revendications 2 ou 4, caractérisée en ce que les outils de frappe sont formés de marteaux séparés (2) qui sont disposés entre les différents plans de lamelles (6).

6. Machine selon les revendications 4 et 5, caractérisée en ce que les marteaux (2) sont répartis en rangées qui sont disposées en direction périphérique du rotor entre les rangées de lamelles.

7. Machine selon l'une des revendications 1 à 6, caractérisée en ce que le dispositif d'évacuation comporte un dispositif séparateur (40 à 46, 50) destiné à séparer le matériau produit des matériaux grossiers ou lourds et à l'aide duquel le matériau produit est recueilli, le matériau grossier est ramené dans le dispositif de fragmentation et le matériau lourd est éliminé.

8. Machine selon la revendication 7, caractérisée en ce que le dispositif d'évacuation comporte une chambre à contre-courant d'air (cylindre 41) au moyen de laquelle le matériau grossier ayant un moindre poids spécifique est dirigé vers un réservoir collecteur pour être ramené au dispositif de fragmentation, et le matériau lourd ayant un poids spécifique plus élevé tombe en sens contraire de l'écoulement.

9. Machine selon la revendication 7 ou 8, caractérisée en ce que le dispositif d'évacuation comporte un crible (50) pour séparer le matériau produit du matériau grossier.

10. Machine selon l'une des revendications 1 à 9, caractérisée en ce que l'axe (4) de rotation du rotor est disposé plus haut que le plan de la surface portante du dispositif d'amenée.

11. Machine selon la revendication 5 ou 6, caractérisée en ce que les lamelles et les marteaux sont assemblés pour former des outils comprenant chacun une lamelle (6') et un marteau (2').

12. Procédé pour produire des copeaux de bois dont la dimension longitudinale est parallèle aux fibres du bois, caractérisé en ce que, au moyen d'un outil de sectionnement, le bois est prédécoupé en segments orientés parallèlement à la direction des fibres, en ce que, au moyen d'un outil de frappe, les segments sont mis en vibration de sorte qu'ils se fendent en fibres isolées ou en faisceaux de fibres, et en ce qu'à chaque coup de l'outil de frappe un morceau des fibres ou faisceaux de fibres ainsi formés est détaché par le choc.

FIG. 1

FIG. 2a

FIG. 2b

FIG. 3

FIG. 4

FIG. 5

**FIG. 6**

**FIG. 7**

2"

**FIG. 8**

88  87  19  85

86

22